# EUROPEAN PATENT SPECIFICATION

(11) **EP 3 288 429 B1**
(45) Date of publication and mention of the grant of the patent: **08.05.2019**
(21) Application number: 16719511.4
(22) Date of filing: 21.03.2016
(51) Int. Cl.: A47J 31/44, A47J 31/46

(54) **DISPENSING SPOUT**
AUSGIESSTÜLLE
BEC VERSEUR DE DISTRIBUTION

(30) Priority: 29.04.2015 IT BS20150071
(43) Date of publication of application: 07.03.2018
(73) Proprietor: Gemme Italian Producers S.r.l., 25045 Castegnato (Brescia) (IT)
(72) Inventor: EPIS, Giorgio, I-25045 Castegnato (Brescia) (IT)
(74) Representative: Gamba, Alessandro
(86) International application number: PCT/IB2016/051577
(87) International publication number: WO 2016/174535

(56) References cited:
- WO-A1-2015/051401
- AU-A1- 2009 200 860
- US-A1- 2012 266 754

## Description

This invention relates to a dispensing spout for filter holder for a coffee machine, the filter holder that comprises it and also a coffee machine comprising said filter holder.

Note that in this description, "coffee machine" indicates all those machines suitable to produce an infused beverage by heating a quantity of water that is then dispensed through a certain quantity of powder, for example a coffee blend. The powder is contained in a filter holder fixable to the machine. Depending on the type of powder and mixture, one obtains an infused beverage, for example coffee, decaffeinated, ginseng or barley coffee or the like.

In the state of the art, many embodiments are known of coffee machines, filter holders for said machines and spouts for dispensing a beverage into a cup.

Examples of known coffee machines, filter holders for said machines and spouts for dispensing a beverage into a cup are disclosed in documents US2012/266754, AU2009200860 and WO2015/1401A1.

In particular, to serve two quantities of beverage simultaneously, for example to serve two cups of coffee, two-way spouts are known, i.e., comprising two nozzles, in such a way that each one of them can dispense the beverage in a respective mug or cup.

The main problem of the known two-way spouts is that of not being efficient when one wishes to dispense the beverage in a single cup. In particular, in fact, the known spouts have the two ways spaced apart to such an extent that they are not centred with respect to the single cup to fill. In using a two-way spout for dispensing a beverage into a single cup, it usually happens that its edges and walls are soiled and, in some cases, part of the beverage is not dispensed into the cup, but outside of it.

At present, this problem is solved by the user, for example a barista, by using a one-way spout when he must prepare a single cup; in fact, the barista usually replaces the filter holder with two-way spout with a filter holder with one-way spout.

The objective of this invention is to provide a spout that eliminates the aforesaid problem of the known art, namely to provide a spout with two ways, or two nozzles, effectively usable both with two cups and with a single cup.

This objective is achieved by a spout according to claim 1, by a filter holder according to claim 13 and a coffee machine according to claim 15. The claims dependent on these describe further forms of preferred embodiments having further advantageous aspects.

The characteristics and advantages of the spout, filter holder and coffee machine will be apparent from the following description, given by way of non-limiting example, in accordance with the accompanying figures, in which:

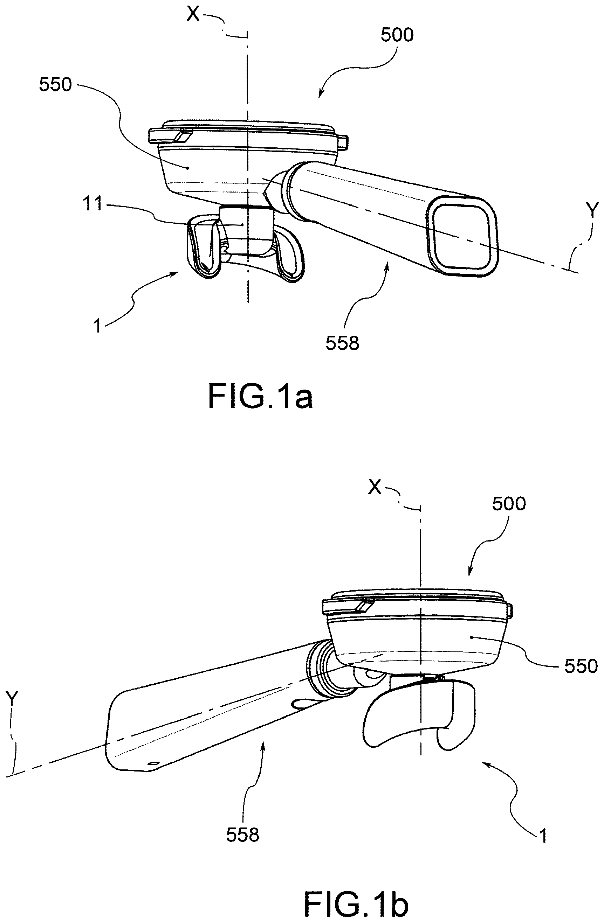

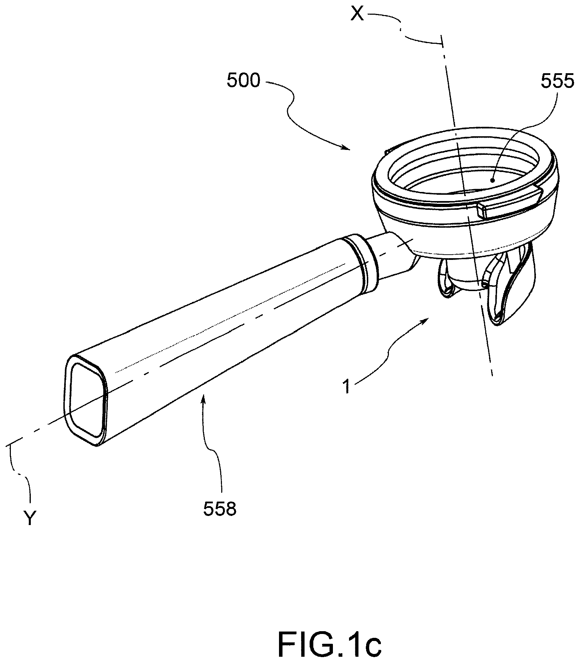

- Figures 1a, 1b and 1c respectively show three perspective views of a filter holder for a coffee machine comprising a dispensing spout according to a preferred embodiment;

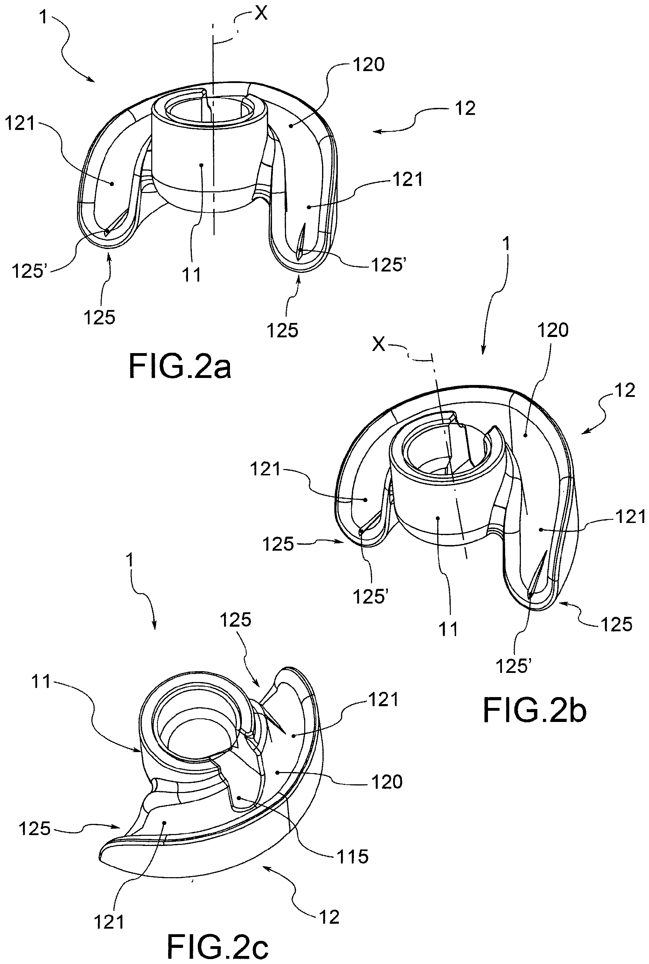

- Figures 2a, 2b and 2c respectively illustrate three perspective views of a dispensing spout according to a preferred embodiment;
- Figures 3a, 3b and 3c respectively represent three orthogonal views, frontal and lateral, and from above of a dispensing spout according to a preferred embodiment;

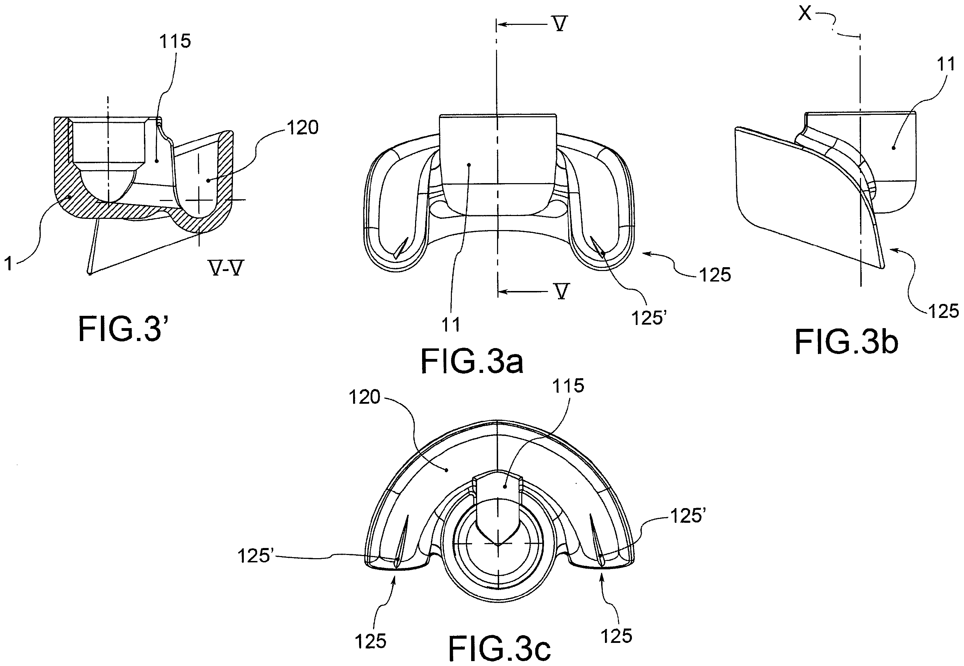

- Figure 3' shows a sectional view according to the plane V-V of the dispensing spout of Figure 3;

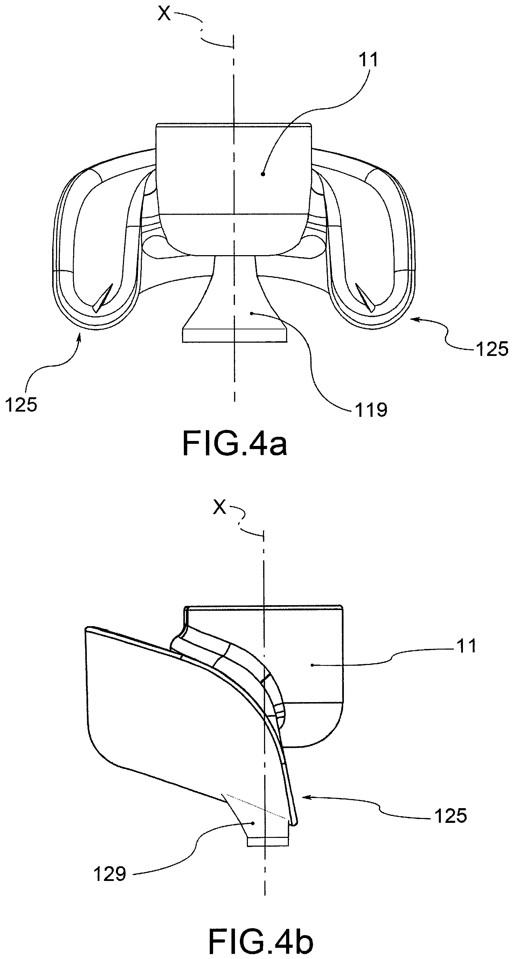

- Figure 4a represents a frontal view of a dispensing spout covered by this invention, according to a further embodiment;
- Figure 4b shows a side view of a dispensing spout covered by this invention according to a further embodiment;

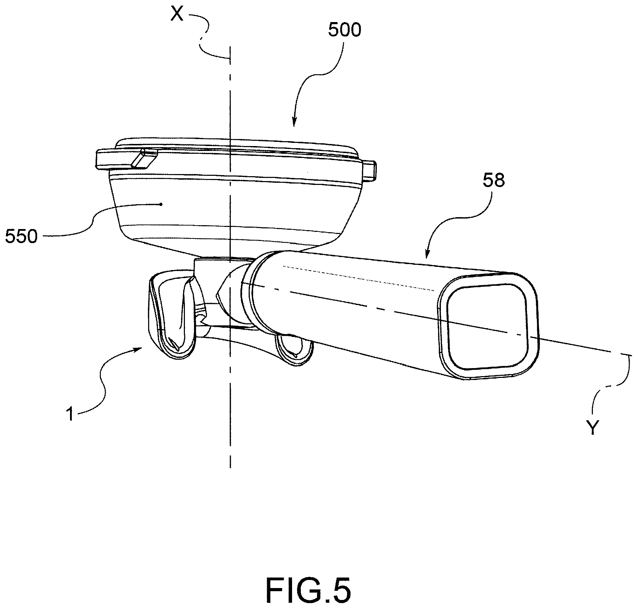

- Figures 5 illustrates a perspective view of a filter holder for coffee machine comprising a dispensing spout according to a further preferred embodiment.

With reference to the accompanying figures, the reference number 1 indicates a dispensing spout for a filter holder 500 for a coffee machine.

In a preferred embodiment, the coffee machine is of the professional type, for example usually used in bars or restaurants.

In further embodiments, the coffee machine is of the type for domestic use.

Preferably, the object of this invention is not limited to a particular type of beverage produced by the coffee machine: in fact, the beverage is a function of the type of powder, or mixture, used.

According to a preferred embodiment, the filter holder 500 is suitable to contain a predefined amount of powder; preferably, the filter holder 500 is suitable to be passed through by water heated by the machine through said amount of powder so that the beverage, for example coffee, is obtained by infusion; preferably, in the filter holder are contained specific filters 555 suitable to allow the housing of a predefined amount of powder, for example as a function of powder itself and/or as a function of the amount and/or the type of beverage to produce.

Preferably, the filter holder 500 comprises a filter holder body 550 specifically suitable to contain the aforesaid filters 555. In addition, the filter holder body 550 is suitable to integrally engage the coffee machine.

According to a preferred embodiment, the dispensing spout 1 is suitable to be placed in fluid communication with the filter holder 500 for the dispensing of said infused beverage.

Preferably, the spout 1 is screwable to the filter holder 500, preferably to the filter holder body 550.

According to a preferred embodiment, the spout 1 develops around a main axis X-X. In a dispensing configuration, in which the spout 1 is mounted on the filter holder 500 and the filter holder 500 is mounted on the machine, said main axis X-X is substantially vertical; preferably, the dispensed descends by gravity in the direction of the main axis X-X. Preferably, with spout 1 mounted on the filter holder bag 550, even this latter extends along the main axis X-X.

According to a preferred embodiment the spout 1 comprises a central portion 11 suitable to be fixed to the filter holder 500. Preferably, said central portion 11 is substantially axially symmetrical with respect to said main axis X-X.

Preferably, the spout 1 also comprises a dispensing portion 12 fluidically connected to the central portion 11 for the dispensing of the beverage descending from the filter holder 500.

According to a preferred embodiment, the spout 1 comprises two channel sections 121 suitable for dispensing two predefined quantities of infused beverage; in other words the spout 1 has two dispensing ways.

According to a preferred embodiment, each channel section 121 terminates in a dispensing nozzle 125, which is the last portion in which the beverage is on the spout before falling.

According to a preferred embodiment, each dispensing nozzle 125 comprises a centring element 125' for directing the delivery of the infused beverage to the centre of the respective nozzle 125. In other words, each linear and straight nozzle 125 for dispensing the infused beverage, has a centring element 125', for example in the form of a notch or a groove that, positioned in the centre of the nozzle 125, channels the dispensing of the infused beverage.

Preferably, each channel section 121 extends peripherally around the central portion 11.

Preferably, the channel sections 121 extend in such a way that the respective nozzles 125 are in a specular angular position relative to the main axis X-X.

According to a preferred embodiment, each channel section 121 extends inclined like a chute to facilitate the dispensing of the infused beverage.

In other words, each channel section 121 is inclined downwards. Preferably, each channel section 121 is inclined with respect to an imaginary plane parallel to the ground at inclinations that arrive to include angles comprised between 0° and 10°.

According to a preferred embodiment, the two dispensing nozzles 125 are arranged radially opposite with respect to the main axis X-X.

While, in further embodiments, the two dispensing nozzles 125 are angularly spaced from each other by an angle less than a flat angle.

Preferably, the two dispensing nozzles 125 have an interaxial distance of up to 60 mm, preferably substantially equal to 50 mm, preferably 49 mm.

In a further embodiment, the two dispensing nozzles 125 have an interaxial distance preferably substantially equal to 40 mm, preferably 39 mm.

According to a preferred embodiment, the spout 1 and, in particular, the dispensing portion 12 comprises a dispensing channel 120 comprising the two channel sections 121. In other words, preferably, the dispensing portion 12 is constituted by a single channel 121 that extends peripherally around the central portion 11, extending between the two dispensing nozzles 125. Preferably, the channel extends along an arc of circumference, preferably along a semi-arc of circumference.

In a preferred embodiment, the dispensing channel 120, in its entirety, is open at the top.

According to a preferred embodiment, the central portion 11 comprises a dispensing mouth 115 formed radially with respect to the main axis X-X suitable to supply the two channel sections 121 with infused beverage.

Preferably, the central portion 11 comprises a single dispensing mouth 115 positioned in the dispensing channel equidistant from the two dispensing nozzles 125. Thus, from the dispensing mouth 115, is dispensed the beverage flowing out of the filter holder 500 and in particular from the central body 550 of the filter holder.

According to a preferred embodiment, the dispensing spout 1 comprises at least one support foot 119, 129 suitable to rest on a support surface while maintaining the dispensing nozzles 125 raised by it. In other words, according to a preferred embodiment, the central portion 11 comprises a support foot 119 that extends along the main axis X-X more than the dispensing nozzles 125. In a preferred embodiment, the dispensing portion 12 comprises two support feet 129 positioned in proximity of the dispensing nozzles 125 that extend along the main axis X-X more than the said dispensing nozzles 125.

Preferably, the support foot 119 protrudes with respect to the nozzles 125 by a measure comprised between 0.50 mm up to 3.00 mm.

According to a preferred embodiment, in accordance with the above-described characteristics, the spout 1 is made in a single piece.

Preferably, the spout 1 is made of a metal selected from the group of brass alloys, aluminium alloys or technopolymers. Preferably, the spout 1 is made of aluminium, brass, chrome-plated brass, zamak or plastic.

According to a further preferred embodiment, the spout 1 also comprises a grippable spout handle 58. Preferably, the spout handle 58 extends along a handle axis Y-Y substantially perpendicular to the main axis X-X.

In a preferred embodiment, the spout handle 58 is integrally connected to the central portion 11.

Preferably, the spout 1, in the embodiment that comprises the spout handle 58, is made in one piece.

In other embodiments, the spout handle 58 is screwable to the central portion 11 of the spout 1.

According to a further embodiment, the filter holder 500 comprises a filter holder handle 558 grippable by the user.

Preferably, the filter holder handle 558 is integrally connected to the powder-holding body 550 that extends along a handle axis Y-Y substantially perpendicular to the main axis X-X.

Preferably, both the spout handle 58 and the filter holder handle 558 extend along a handle axis Y-Y that extends radially from the main axis X-X preferably inclined by a few degrees, up to inclinations that arrive to include angles between 0° and 10°, to facilitate the support of the filter holder 500 on a support surface, when not mounted to the respective coffee machine.

Innovatively, the dispensing spout, the filter holder and the coffee machine of this invention solve the problem of the prior art mentioned above being suitable to perform the operation of dispensing a beverage in an effective manner both with two cups and with a single cup.

Advantageously, the dispensing spout of this invention makes unnecessary the replacement of a two-way spout with a one-way spout, and possibly of the respective filter holder, to dispense a beverage in a single cup.

Moreover, advantageously, the dispensing spout has a compact and resistant shape.

A further advantage resides in the fact that the dispensing of the beverage through the dispensing spout is performed effectively and smoothly because the dispensing channel has a less complex shape, offering a non-tortuous path.

A still further advantage of the dispensing spout lies in the fact that the dispensing of the beverage has a new and attractive aesthetic appearance.

Advantageously, the dispensing spout in the embodiment comprising at least one support foot avoids resting on the dispensing nozzles and thus ensures their cleanliness and their hygienic state.

Moreover, advantageously, the dispensing spout in the embodiment comprising a spout handle facilitates the emptying of the powder contained in the filter holder, thanks to a different balancing of the weights of the filter holder.

A further advantage lies in the fact that the dispensing spout of this invention is usable with small-sized cups, for example those used for espresso coffee, medium-sized cups, for example for cappuccino and even large-sized cups, for example for American coffee.

Further embodiments are feasible of the dispensing spout, the filter holder and the coffee machine according to the invention.

Each of the variants described as belonging to a possible embodiment can be realised independently of the other variants.

Embodiments are foreseeable in which the dispensing portion 12, in the respective channel sections 121 includes drop-breaker elements suitable to break any air bubbles of the infused beverage.

Furthermore, some embodiments, have the support foot 119 or the support feet 129 mountable, for example by screwing, to the central portion 11 or to the dispensing portion 12.

It is clear that one skilled in the art, in order to meet contingent needs, may make changes to the dispensing spout, filter older for coffee machine and coffee machine described above, all contained within the scope of protection defined by the following claims.

## Claims

1. Dispensing spout (1) for filter holder (500) for a coffee machine suitable to provide an infused beverage, wherein the spout (1) is suitable to be placed in fluidic communication with the filter holder (500) for the dispensing of said infused beverage, and wherein the spout (1) develops around a main axis (X-X) and comprises:
i) a central portion (11) suitable to be fixed to the filter holder (500); and
ii) a dispensing portion (12) fluidically connected to the central portion (11) comprising two channel sections (121) suitable for dispensing two predefined quantities of infused beverage;
wherein the dispensing spout (1) is **characterized by** the fact that each channel section (121) terminates in a dispensing nozzle (125) and extends peripherally around the central portion (11) in such a way that the two nozzles (125) are in a specular angular position relative to the main axis (X-X).

2. Spout (1) according to claim 1, wherein each channel section (121) extends inclined like a chute to facilitate the dispensing of the infused beverage.

3. Spout (1) in accordance with any of the preceding claims, wherein each dispensing nozzle (125) comprises a centring element (125') for directing the delivery of the infused beverage to the centre of the respective nozzle (125).

4. Spout (1) according to any of the preceding claims, wherein the two dispensing nozzles (125) are arranged radially opposite with respect to the main axis (X-X).

5. Spout (1) according to any of the preceding claims, wherein the two dispensing nozzles (125) have an interaxial distance of up to 60 mm, preferably substantially equal to 50 mm, preferably 49 mm, preferably substantially equal to 40 mm, preferably 39 mm.

6. Spout (1) according to any of the preceding claims, wherein the dispensing portion (12) comprises a dispensing channel (120) comprising the two channel sections (121) .

7. Spout (1) according to any of the preceding claims, wherein each channel section (121) or, according to claim 6 the dispensing channel (120) in its entirety, is open at the top.

8. Spout (1) according to any of the preceding claims, wherein the central portion (11) comprises a dispensing mouth (115) formed radially with respect to the main axis (X-X) and suitable to supply the two channel sections (121) with infused beverage.

9. Spout (1) according to any of the preceding claims, further comprising at least a support foot (119, 129) suitable to rest on a support surface while maintaining the dispensing nozzles (125) raised by it.

10. Spout (1) according to any of the previous claims, wherein said spout (1) is made in a single piece.

11. Spout (1) according to any of the preceding claims, wherein the spout (1) is made of a metal selected from the group of aluminium alloys or the group of brass alloys or of the technopolymers.

12. Spout (1) according to any of the preceding claims, further comprising a grippable spout handle (58) that extends along a handle axis (Y-Y) substantially perpendicular to the main axis (X-X).

13. Filter holder (500) for a coffee machine comprising:
- a powder-holding body (550) suitable to contain a predefined amount of powder;
- a spout (1) according to any of claims 1 to 11 fixable to the powder-holding body (550);
- a filter holder handle (558), grippable by the user, integrally connected to the powder-holding body (550) that extends along a handle axis (Y-Y) substantially perpendicular to the main axis (X-X).

14. Filter holder (500) for a coffee machine comprising:
- a powder-holding body (550) suitable to contain a predefined amount of powder;
- a spout (1) according to claim 12.

15. Coffee machine comprising a filter holder (500) according to claim 13 or claim 14.

## Patentansprüche

1. Abgabetülle (1) für einen Filterhalter (500) für eine Kaffeemaschine, welche dazu geeignet ist, ein aufgebrühtes Getränk bereitzustellen, wobei die Tülle (1) dazu geeignet ist, zur Abgabe des aufgebrühten Getränks in fluidischer Kommunikation mit dem Filterhalter (500) platziert zu sein, und wobei die Tülle (1) sich um eine Hauptachse (X-X) erstreckt und umfasst:
i) einen Zentralabschnitt (11), welcher dazu geeignet ist, an dem Filterhalter (500) fixiert zu sein; und
ii) einen fluidisch mit dem Zentralabschnitt (11) verbundenen Abgabeabschnitt (12), welcher zwei Kanalabschnitte (121) umfasst, welche dazu geeignet sind, zwei vordefinierte Mengen eines aufgebrühten Getränks abzugeben;
wobei die Abgabetülle (1) durch die Tatsache gekennzeichnet ist, dass jeder Kanalabschnitt (121) in einer Abgabedüse (125) endet und sich in einer derartigen Weise peripher um den Zentralabschnitt (11) erstreckt, dass die beiden Düsen (125) sich in einer spiegelnden Winkelposition relativ zu der Hauptachse (X-X) befinden.

2. Tülle (1) nach Anspruch 1, wobei sich jeder Kanalabschnitt (121) geneigt wie eine Rinne erstreckt, um die Abgabe des aufgebrühten Getränks zu erleichtern.

3. Tülle (1) nach einem der vorhergehenden Ansprüche, wobei jede Abgabedüse (125) ein Zentrierelement (125') zum Leiten der Zuführung des aufgebrühten Getränks zu der Mitte der jeweiligen Düse (125) umfasst.

4. Tülle (1) nach einem der vorhergehenden Ansprüche, wobei die beiden Abgabedüsen (125) radial entgegengesetzt in Bezug auf die Hauptachse (X-X) angeordnet sind.

5. Tülle (1) nach einem der vorhergehenden Ansprüche, wobei die beiden Abgabedüsen (125) einen Achsabstand von bis zu 60 mm, vorzugsweise von im Wesentlichen gleich 50 mm, vorzugsweise 49 mm, vorzugsweise von im Wesentlichen gleich 40 mm, vorzugsweise 39 mm aufweisen.

6. Tülle (1) nach einem der vorhergehenden Ansprüche, wobei der Abgabeschnitt (12) einen Abgabekanal (120) umfasst, welcher zwei Kanalabschnitte (121) umfasst.

7. Tülle (1) nach einem der vorhergehenden Ansprüche, wobei jeder Kanalabschnitt (121) oder, nach Anspruch 6 der Abgabekanal (120) in seiner Gesamtheit, an der Oberseite offen ist.

8. Tülle (1) nach einem der vorhergehenden Ansprüche, wobei der Zentralabschnitt (11) einen Abgabemund (115) umfasst, welcher radial in Bezug auf die Hauptachse (X-X) ausgebildet und dazu geeignet ist, die beiden Kanalabschnitte (121) mit einem aufgebrühten Getränkt zu versorgen.

9. Tülle (1) nach einem der vorhergehenden Ansprüche, ferner umfassend wenigstens einen Stützfuß (119, 129), welcher dazu geeignet ist, sich auf eine Stützfläche zu stützen, während er die durch diesen angehobenen Abgabedüsen (125) hält.

10. Tülle (1) nach einem der vorhergehenden Ansprüche, wobei die Tülle (1) in einem einzigen Stück hergestellt ist.

11. Tülle (1) nach einem der vorhergehenden Ansprüche, wobei die Tülle (1) aus einem Metall, welches aus der Gruppe von Aluminiumlegierungen oder der Gruppe von Messinglegierungen ausgewählt ist oder aus den Technopolymeren hergestellt ist.

12. Tülle (1) nach einem der vorhergehenden Ansprüche, ferner umfassend einen greifbaren Tüllengriff (58), der sich entlang einer Griffachse (Y-Y) im Wesentlichen lotrecht zu der Hauptachse (X-X) erstreckt.

13. Filterhalter (500) für eine Kaffeemaschine, umfassend:
- einen Pulverhaltekörper (550), welcher dazu geeignet ist, eine vordefinierte Menge von Pulver zu enthalten;
- eine Tülle (1) nach einem der Ansprüche 1 bis 11, welche an dem Pulverhaltekörper (550) fixierbar ist;
- einen Filterhaltergriff (558), welcher durch den Benutzer greifbar ist und integral mit dem Pulverhaltekörper (550) verbunden ist, der sich entlang einer Griffachse (Y-Y) im Wesentlichen lotrecht zu der Hauptachse (X-X) erstreckt.

14. Filterhalter (500) für eine Kaffeemaschine, umfassend:
- einen Pulverhaltekörper (550), welcher dazu geeignet ist, eine vordefinierte Menge von Pulver zu enthalten;
- eine Tülle (1) nach Anspruch 12.

15. Kaffeemaschine, umfassend einen Filterhalter (500) nach Anspruch 13 oder Anspruch 14.

## Revendications

1. Bec verseur (1) de distribution pour porte-filtre (500) pour une machine à café apte à fournir une boisson infusée, dans lequel le bec verseur (1) est apte à être placé en communication fluidique avec le porte-filtre (500) pour délivrer ladite boisson infusée, et dans lequel le bec verseur (1) se développe autour d'un axe principal (X-X) et comprend :
i) une partie centrale (11) apte à être fixée au porte-filtre (500) ; et
ii) une partie de distribution (12) reliée fluidiquement à la partie centrale (11) et comprenant deux portions de canal (121) aptes à distribuer deux quantités prédéfinies de boisson infusée ;
dans lequel le bec verseur (1) de distribution est **caractérisé par le fait que** chaque portion de canal (121) se termine par une buse (125) de distribution et s'étend de manière périphérique autour de la partie centrale (11) de telle sorte que les deux buses (125) se trouvent en position angulaire spéculaire par rapport à l'axe principal (X-X).

2. Bec verseur (1) selon la revendication 1, dans lequel chaque portion de canal (121) s'étend en pente pour faciliter la distribution de la boisson infusée.

3. Bec verseur (1) selon l'une quelconque des revendications précédentes, dans lequel chaque buse de distribution (125) comprend un élément de centrage (125') pour diriger l'arrivée de la boisson infusée au centre de la buse (125) correspondante.

4. Bec verseur (1) selon l'une quelconque des revendications précédentes, dans lequel les deux buses (125) de distribution sont agencées de manière radialement opposée par rapport à l'axe principal (X-X).

5. Bec verseur (1) selon l'une quelconque des revendications précédentes, dans lequel les deux buses (125) de distribution ont une distance interaxiale d'au moins 60 mm, de préférence sensiblement égale à 50 mm, de préférence 49 mm, de préférence sensiblement égale à 40 mm, de préférence 39 mm.

6. Bec verseur (1) selon l'une quelconque des revendications précédentes, dans lequel la partie de distribution (12) comprend un canal de distribution (120) comprenant les deux portions de canal (121).

7. Bec verseur (1) selon l'une quelconque des revendications précédentes, dans lequel chaque portion de canal (121) ou, selon la revendication 6, le canal de distribution (120) dans sa totalité, sont ouverts en partie supérieure.

8. Bec verseur (1) selon l'une quelconque des revendications précédentes, dans lequel la partie centrale (11) comprend un goulot de distribution (115) formé radialement par rapport à l'axe principal (X-X) et apte à alimenter les deux portions de canal (121) en boisson infusée.

9. Bec verseur (1) selon l'une quelconque des revendications précédentes, comprenant en outre au moins un pied de support (119, 129) apte à reposer sur une surface de support tout en maintenant les buses (125) de distribution surélevées par ce dernier.

10. Bec verseur (1) selon l'une quelconque des revendications précédentes, dans lequel ledit bec verseur (1) est fait d'une seule pièce.

11. Bec verseur (1) selon l'une quelconque des revendications précédentes, dans lequel le bec verseur (1) est réalisé dans un métal choisi dans le groupe des alliages d'aluminium ou le groupe des alliages de laiton ou des technopolymères.

12. Bec verseur (1) selon l'une quelconque des revendications précédentes, comprenant en outre une poignée de bec verseur préhensible (58) qui s'étend le long d'un axe de poignée (Y-Y) sensiblement perpendiculaire à l'axe principal (X-X).

13. Porte-filtre (500) pour machine à café, comprenant :
- un corps de réception de poudre (550) apte à contenir une quantité prédéfinie de poudre ;
- un bec verseur (1) selon l'une quelconque des revendications 1 à 11 pouvant être fixé sur le corps de réception de poudre (550) ;
- une poignée de porte-filtre (558), pouvant être saisie par l'utilisateur, reliée d'un seul tenant au corps de réception de poudre (550) et qui s'étend le long d'un axe de poignée (Y-Y) sensiblement perpendiculaire à l'axe principal (X-X).

14. Porte-filtre (500) pour machine à café, comprenant :
- un corps de réception de poudre (550) apte à contenir une quantité prédéfinie de poudre ;
- un bec verseur (1) selon la revendication 12.

15. Machine à café comprenant un porte-filtre (500) selon la revendication 13 ou la revendication 14.
